# EUROPEAN PATENT APPLICATION

(11) **EP 2 551 049 A1**
(43) Date of publication of application: **30.01.2013**
(21) Application number: 11759107.3
(22) Date of filing: 17.02.2011
(51) Int. Cl.: B23K 20/12, B23K 20/26

(54) **FRICTION PROCESSING TOOL, AND METHOD AND APPARATUS FOR FRICTION PROCESSING USING SAME**

(30) Priority: 24.03.2010 JP 2010068078
(71) Applicant: Public University Corporation Osaka Prefecture University, Osaka 599-8531 (JP); Kinki University, Higashiosaka-shi Osaka 577-8502 (JP); Isel Co., Ltd, Yao-shi, Osaka 581-0068 (JP)
(72) Inventor: TAKASUGI, Takayuki, Sakai-Shi Osaka 599-8531 (JP); KANENO, Yasuyuki, Sakai-Shi Osaka 599-8531 (JP); OKI, Sachio, Higashiosaka-shi Osaka 577-8502 (JP); KUBO, Keishi, Higashiosaka-shi Osaka 577-8502 (JP); MOCHIZUKI, Noboru, Yao-shi Osaka 581-0068 (JP); HIRATA, Tomotake, Izumi-shi Osaka 594-1157 (JP)
(74) Representative: Schicker, Silvia
(86) International application number: PCT/JP2011/053399
(87) International publication number: WO 2011/118299

(57) **Abstract**

Provided are a friction processing tool in which a service life of the tool is improved and which can reduce a labor hour for manufacturing and a manufacturing cost, and a friction processing apparatus and a friction processing method using the same. In a friction working tool 20 for softening and processing workpieces W1 and W2 of a metal material by frictional heat generated by being pressed against the workpieces while being rotated, a cylindrical tool body 21 is provided, and a distal end surface of the tool body brought into contact with the workpieces W1 and W2 is formed only by a flat shoulder surface 22. The material of the friction processing tool 20 is made of Ni-based dual multi-phase intermetallic compound alloys.

## Description

### Technical Field

The present invention relates to a friction processing tool which is used, for example, in order to soften and butt the workpieces of a metal material abutting on against each other by frictional heat, and relates to a friction processing apparatus and a friction processing method which are using the same tool.

### Background Art

As the processing method, friction stir welding (FSW) has been known. The friction stir welding is a method of softening and butting the workpieces of a metal material against each other by the frictional heat generated by relatively moving a rotating cylindrical tool to a joining direction while being pressed along a joining line formed by the workpieces abutting on against each other.Further, friction stir processing (FSP) which improves strength and hardness of a surface of the workpiece, and friction spot joining (FSJ) which performs spot joining of the workpieces are also carried out by using the tool, and these and the friction stir welding are generically named friction stir processing.

A tool for the friction stir processing is provided with a cylindrical tool body, a shoulder surface which is formed in a distal end surface of the tool body, and a probe which is provided in a protruding manner in the center of the shoulder surface. Further, the tool for the friction stir processing is required a material which is higher in physical properties such as hardness, a melting point, and wear resistance than the workpiece, and tool steel such as SKD steel is mainly used for joining the workpiece of a low melting point material such as an aluminum material. On the other hand, in a case of joining the workpiece of an iron-based material such as stainless steel, a tool for friction stir processing made of ceramics or cemented carbide is used. However, there is a problem that the tool for the friction stir processing made of ceramics tends to be broken, and the tool for the friction stir processing made of the cemented carbide tends to wear for a short time. Accordingly, there has been proposed a tool for the friction stir processing made of Ni-based dual multi-phase intermetallic compound alloys with high strength and an excelling high-temperature characteristic (Patent Document 1).

### Prior Art Document

### Patent Document

Patent Document 1: JP 2009-255170(A)

### Summary of the Invention

### Problem to be Solved by the Invention

In the meantime, the probe of the tool for the friction stir processing is provided for making a softened metal material fluidize in a length direction of the probe in the case of joining the workpieces to each other, and improving joining strength, however, since it is necessary to work the probe, a shape of the tool becomes complicated, and a manufacturing cost is high. Further, if the probe is broken, the tool for the friction stir processing cannot be used any more. Further, in some depth of the probe, there is a risk that a defect such as a hole tends to be generated in a joining portion in the case of carrying out the FSW for joining thin plates to each other.

In view of the circumstances above, an obj ect of the present invention to provide a friction processing tool in which a service life of the tool is improved and a labor hour for manufacturing and a manufacturing cost can be reduced, and a friction processing apparatus and a friction processing method using the same.

### Means for Solving the Problem

A friction processing tool according to the present invention is a friction processing tool for softening and processing workpieces by frictional heat generated by being pressed against the workpieces of a metal material while being rotated,
wherein the tool is provided with a cylindrical tool body, and a distal end surface of the tool body brought into contact with the workpiece is formed only by a flat shoulder surface.

According to this, since any probe which tends to wear is not provided on the shoulder surface, a service life of the friction processing tool is improved. Further, since it is not necessary to form the probe on the shoulder surface, it is possible to reduce a labor hour for manufacturing the friction processing tool and a manufacturing cost. Further, since the distal end surface of the tool body brought into contact with the workpiece is formed only by the flat shoulder surface, it is possible to soften the workpiece by the frictional heat and make it plastically deform or fluidize mainly in a radial direction of the shoulder surface so as to be processed. In this case, the tool based on the processing principle mentioned above is called the friction processing tool.

The material of the friction processing tool is preferably Ni-based dual multi-phase intermetallic compound alloys.
In this case, the friction processing tool becomes excellent in heat resistance and wear resistance. Accordingly, this friction processing tool achieves the necessary hardness even under high temperature caused by the frictional heat at the time of processing the workpiece, and can provide good joining or the like with respect to the workpiece which is made of an iron-based material such as stainless steel, even without any probe.

Further, a friction processing apparatus according to the present invention is a friction processing apparatus including a processing mechanism which presses a friction processing tool against workpieces of a metal material while rotating and relatively moves it in a processing direction,
wherein the friction processing tool is the friction processing tool as described in claim 1 or 2, and a ratio of a shoulder diameter with respect to a thickness of a thin plate serving as the workpiece is between 6.5 and 15, and
wherein the processing mechanism is set such that a tool feeding speed is between 500 and 900 mm/min.
Note that, it is desirable that a condition of the friction processing tool and the processing mechanism is set with respect to a thin plate made of an iron-based material having a thickness equal to or less than 1.5 mm, as the workpiece.

According to this, in addition to the operation and the effect of the friction processing tool, it is possible to carry out good joining or the like with respect to the thin plate of the workpiece which is made of the iron-based material such as the stainless steel, by the friction processing tool with no probe.

It is desirable that the friction processing apparatus includes a tool reconditioning mechanism which grinds, with a grinding wheel, a distal end surface formed only by the shoulder surface in the friction processing tool which is worn away due to the friction processing,
wherein the tool reconditioning mechanismisprovided with control means which controls such that the grinding wheel is rotated while rotating the friction processing tool to grind the shoulder surface of the tool body, and that the reconditioning process is stopped if an output value of torque detecting means detecting a rotating torque of the friction processing tool reaches a predetermined set value.

Since the shoulder surface is worn away, a contact state between the shoulder surface and the workpiece becomes unstable, and it is impossible to obtain a good joined state. On the other hand, according to the tool reconditioning mechanism, even if the shoulder surface of the friction processing tool is worn away, it is possible to restore and recondition the shoulder surface to a flat surface state by the tool reconditioning mechanism. Therefore, since the friction processing tool which is worn away can be reused by the reconditioning process or the like, a service life of the friction processing tool can be further improved, and it is possible to reduce a tool exchanging frequency. Particularly, since no probe is provided in this friction processing tool, it is possible to simply form a structure of the grinding wheel in the tool reconditioning mechanism, and it becomes easy to recondition.

Further, the rotating torque of the friction processing tool is detected by the torque detecting portion at the time of reconditioning the tool, the value of the rotating torque, for example, at a time when the shoulder surface is made into a smooth flat surface is usedas a set value, and the reconditioning process is stopped at a time when the rotating torque reaches the set value. Thereby, it is possible to carry out a good tool reconditioning process without any waste of time and without too much grinding.

On the other hand, a friction processing method according to the present invention is a friction processing method of softening and processing workpieces of a metal material by frictional heat, by pressing a friction processing tool against the workpieces while rotating and relatively moving it in a processing direction,
wherein the friction processing tool is the friction processing tool as described in claim 1 or 2, and the workpieces by using the friction processing tool in which a ratio of a shoulder diameter with respect to a thickness of a thin plate made of an iron-based material having a thickness equal to or less than 1.5 mm, as the workpiece is between 6.5 and 15.
According to this, it is possible to achieve the same operation and effect as those of the friction processing tool and the friction processing apparatus.

### Effect of the Invention

As mentioned above, according to the present invention, a tool service life of the friction processing tool canbe improved, and it is possible to reduce a labor hour for manufacturing and a manufacturing cost. Further, it is possible to provide good joining with respect to the thin plate serving as the workpiece which is made of the iron-based material such as the stainless steel even without any probe.

### Brief Description of the Drawings

Fig. 1 is a view showing a friction processing tool according to an embodiment, in which Fig. 1(A) is a perspective view of the tool, and Fig. 1(B) is a side elevational view of the same.
Fig. 2 is a perspective view showing a general structure of a friction stir welding apparatus.
Fig. 3 is an enlarged cross sectional view of a portion of a tool grinding apparatus serving as a tool reconditioning mechanism of the friction stir welding apparatus.
Fig. 4 is a schematic view showing a relationship between a work processing operation position and a tool reconditioning operation position.
Fig. 5 is a photograph of a joined portion of a thin plate which is obtained by a friction welding according to Example 1 photographed from a front side.
Fig. 6 is a photograph of a joined portion of a thin plate which is obtained by a friction welding according to Example 2 photographed from a front side.
Fig. 7 is a photograph of a joined portion of a thin plate which is obtained by a friction welding according to Example 3 photographed from a front side.
Fig. 8 is a photograph of a joined portion of a thin plate which is obtained by a friction welding according to Example 4 photographed from a front side.
Fig. 9 is a photograph of a joined portion of a thin plate which is obtained by a friction welding according to Example 5 photographed from a front side.
Fig. 10 is a photograph of a joined portion of a thin plate which is obtained by a friction welding according to Example 6 photographed from a front side.
Fig. 11 is a photograph of a joined portion of a thin plate which is obtained by a friction welding according to Example 7 photographed from a front side.
Fig. 12 is a photograph of a joined portion of a thin plate which is obtained by a friction welding according to Example 8 photographed from a front side.
Fig. 13 is a photograph of a joined portion of a thin plate which is obtained by a friction welding according to Example 9 photographed from a front side.
Fig. 14 is a photograph of a joined portion of a thin plate which is obtained by a friction welding according to Example 10 photographed from a front side.
Fig. 15 is a photograph of a joined portion of a thin plate which is obtained by a friction welding according to Example 11 photographed from a front side.
Fig. 16 is a photograph of a joined portion of a thin plate which is obtained by a friction welding according to Example 12 photographed from a front side.
Fig. 17 is a photograph of a joined portion of a thin plate which is obtained by a friction welding according to Example 13 photographed from a front side.
Fig. 18 is a photograph of a joined portion of a thin plate which is obtained by a friction stir welding according to a reference example photographed from a front side.

### Mode for Carrying Out the Invention

### (Friction Processing Tool)

A friction processing tool is a tool for softening the workpieces of a metal material by frictional heat generated by being pressed against the workpieces while being rotated and making the workpieces plastically deform or fluidize mainly in a radial direction of a shoulder surface so as to process the workpieces. The friction processing tool (hereinafter, referred appropriately to as a "tool") is made of Ni-based dual multi-phase intermetallic compound alloys, is provided with a cylindrical tool body, and is structured such that a distal end surface of the tool body brought into contact with the workpiece is formed only by a flat shoulder surface. In this case, the tool can be called a tool for friction stir processing in the case of being used in the friction stir welding (FSW), the friction stir processing (FSP), the friction spot joining (FSJ), or the like which are mentioned in the background art.

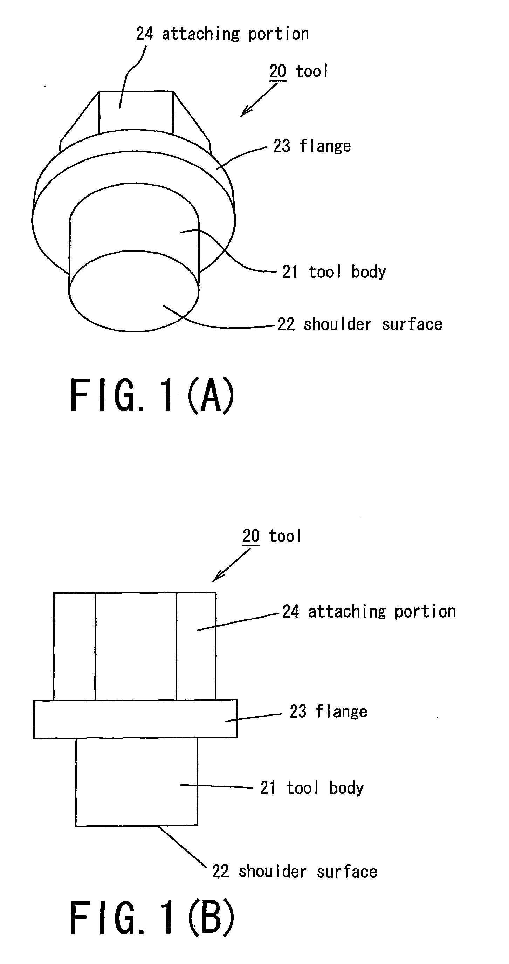

In other words, as shown in Fig. 1, a tool 20 has a cylindrical tool body 21, and a hexagonal columnar attaching portion 24 which is formed in a base end side of the tool body 21 with a flange 23 interposed therebetween. The attaching portion 24 is detachably fixed to a tool holder 3 of a friction processing apparatus, and the tool body 21 is pressed against the workpiece. The tool 20 is structured such that a distal end surface of the tool body 21 pressed against the workpiece is formed only by a flat shoulder surface 22, and a conventional projection shaped probe is not provided in the shoulder surface 22. Accordingly, the flat shoulder surface 22 is adapted to carry out friction joining by being pressure contacted while being rotated with respect to a joining line which is formed by causing end portions of workpieces such as plate members to butt against each other. Note that, the shoulder surface 22 may be structured such that not only a generating line thereof is formed as a flat surface which is vertical to an axis line of the tool body 21, but also the generating line is formed as a slightly convex or concave curved surface. Further, a shoulder diameter (a diameter of the shoulder surface 22) of the tool 20 is set in such a manner that a ratio of the shoulder diameter to a thickness of the thin plate serving as the workpiece is between 6.5 and 15. For example, in the case that the thickness of the thin plate is equal to or less than 1.5 mm, the shoulder diameter of the tool is set to 8 to 14 mm.

The tool 20 is made of the Ni-based dual multi-phase intermetallic compound alloys, for securely carrying out the joining even if the workpiece is an iron-based alloy which is a higher melting point material in comparison with an aluminum alloy. As the Ni-based dual multi-phase intermetallic compound alloys, the alloy is not limited as long as it has the Ni-based dual multi-phase intermetallic compound compound.

As the Ni-based dual multi-phase intermetallic compound alloys, for example, there have been known Ni₃Al(L1₂)-Ni₃Ti(D0₂₄)-Ni₃V(D0₂₂)-based intermetallic compound alloys (refer to International Publication WO2006/1011212), Ni₃Al (L1₂)-Ni₃Nb(D0ₐ)-Ni₃V(D0₂₂)-based intermetallic compound alloys (refer to International Publication WO2007/086185) etc.

Specific examples of the Ni₃Al(L1₂)-Ni₃Ti(D0₂₄)-Ni₃V(D0₂₂)-based intermetallic compound alloys include Ni₃Al-based intermetallic compound compound which is constituted by Al: more than 5 atomic % and equal to or less than 13 atomic %, V: equal to or more than 9.5 atomic % and less than 17.5 atomic %, Ti: equal to or more than 0 atomic % and equal to or less than 3.5 atomic %, B: equal to or more than 0 weight ppm and equal to or less than 1000 weight ppm, the remainder: Ni except impurities, and has a dual multi-phase constitution of a pro-eutectoid L1₂ phase and (L1₂ + D0₂₂) eutectoid constitution.

The intermetallic compound compound can be produced by a method including the steps of: carrying out a first heat treatment at a temperature at which the pro-eutectoid L1₂ phase and the Al phase coexist, with respect to an alloy material which is constituted by Al: more than 5 atomic % and equal to or less than 13 atomic %, V: equal to or more than 9.5 atomic % and less than 17.5 atomic %, Ti: equal to or more than 0 atomic % and equal to or less than 3.5 atomic %, B: equal to or more than 0 weight ppm and equal to or less than 1000 weight ppm, the remainder: Ni except impurities; and thereafter cooling to a temperature at which the L1₂ phase and the D0₂₂ phase coexist, or carrying out a second heat treatment at a temperature at which the L1₂ phase and the D0₂₂ phase coexist, so that the Al phase is transformed into (L1₂ + D0₂₂) eutectoid constitution to form the dual multi-phase constitution. Alternatively, it can be produced by a method including the step of forming the dual multi-phase constitution by gradually cooling the alloy of the constitution mentioned above from an Al single phase region having a high temperature.

Further, specific examples of the N1₃Al(L1₂)-N1₃Nb(D0ₐ)-N1₃V(D0₂₂)-based intermetallic compound alloys include Ni₃Al-based intermetallic compound compound which is constituted by Al: more than 5 atomic % and equal to or less than 13 atomic %, V: equal to or more than 9.5 atomic % and less than 17.5 atomic %, Nb: equal to or more than 0 atomic % and equal to or less than 5 atomic %, B: equal to or more than 50 weight ppm and equal to or less than 1000 weight ppm, the remainder: Ni except impurities, and has a dual multi-phase constitution of a pro-eutectoid L1₂ phase and (L1₂ + D0₂₂) eutectoid constitution.

The intermetallic compound compound can be produced by the steps of carrying out a first heat treatment at a temperature at which the pro-eutectoid L1₂ phase and the Al phase coexist, or at a temperature at which the pro-eutectoid L1₂ phase, the Al phase, and the D0ₐ phase coexist, with respect to an alloy material which is constituted by Al: more than 5 atomic % and equal to or less than 13 atomic %, V: equal to or more than 9.5 atomic % and less than 17.5 atomic %, Nb: equal to or more than 0 atomic % and equal to or less than 5 atomic %, B: equal to or more than 50 weight ppm and equal to or less than 1000 weight ppm, the remainder: Ni except impurities; and thereafter cooling to a temperature at which the L1₂ phase and the D0₂₂ phase coexist, or carrying out a second heat treatment at the temperature, so that the Al phase is transformed into (L1₂ + D0₂₂) eutectoid constitution to form the dual multi-phase constitution. Alternatively, it can be produced by a method including the step of forming the dual multi-phase constitution by gradually cooling the alloy of the constitution mentioned above from the Al single phase region having a high temperature.

Further, the material of the tool 20 preferably employs Ni-based dual multi-phase intermetallic compound alloys which include B: 10 to 1000 weight ppm with respect to a total weight of a constitution of totally 100 atomic % having Ni as a main component and including Al: 2 to 9 atomic %, V: 10 to 17 atomic %, Ta and/or W: 0.5 to 8 atomic %, Nb: 0 to 6 atomic %, Co: 0 to 6 atomic %, Cr: 0 to 6 atomic %, and the dual multi-phase constitution of the pro-eutectoid L1₂ phase and the (L1₂ + D0₂₂) eutectoid constitution, in a point that it is excellent in heat resistance and wear resistance. Note that, in the present specification, "to" mentioned above includes an upper limit value and a lower limit value.
Since Ta and/or W includes 0.5 to 8 atomic %, an effect of improving hardness can be obtained.
Nb, Co, and Cr are optional components, however, Nb is added for improving strength of the duel multi-phase constitution, and Co and Cr are added for improving oxidation resistance.
B is added for improving ductility of the obtained alloy.
Further, since it has the dual multi-phase constitution of the pro-eutectoid L1₂ phase and the (L1₂ + D0₂₂) eutectoid constitution, the intermetallic compound alloys are excellent in mechanical properties such as tensile strength and creep resistance.

Further, the material of the tool 20 preferably employs Ni-based dual multi-phase intermetallic compound alloys which include B: 10 to 1000 weight ppm with respect to a total weight of a constitution of totally 100 atomic % having Ni as a main component and including Al: 5.5 to 13 atomic %, V: 10 to 17 atomic %, Nb: 0 to 6 atomic %, Ti: 0 to 6 atomic %, Co: 0 to 6 atomic %, Cr: 0 to 6 atomic %, and the dual multi-phase constitution of the pro-eutectoid L1₂ phase and the (L1₂ + D0₂₂) eutectoid constitution, in a point that it is excellent in heat resistance and wear resistance, in the same manner as mentioned above.

The production of the tool 20 may be carried out by a melting and casting method, a deformation processing such as hot forging of a forged material, a powder metallurgy method, or the like. For example, the production of the tool of the Ni-based dual multi-phase intermetallic compound alloys can be carried out by various producing methods, and an ingot is prepared by melting and casting a structure obtained by weighing ingots of a predetermined element (each equal to or more than 99.9 weight%) and B in order to obtain to a predetermined composition according to a vacuum induction melting method, an arc melting method and the like. The tool is produced by processing into a predetermined shape by appropriately using electric discharge machining, cutting, grinding, polishing, or the like from the ingot.

According to the tool 20, since a distal end surface of the tool body 21 which is brought into contact with the workpiece is formed only by the flat shoulder surface 22, it is possible to process the workpiece by softening by frictional heat so as to make it plastically deform or fluidize mainly in a radial direction of the shoulder surface 22. Since the shoulder surface 22 of the tool 20 is formed flat, and the shoulder surface 22 is not provided with the probe which tends to be worn away and broken, a service life of the tool 20 can be improved. Further, since it is not necessary to form the probe on the shoulder surface 22, it is possible to reduce a labor hour for manufacturing the tool 20 and a manufacturing cost. Further, since the tool 20 is made of the Ni-based dual multi-phase intermetallic compound alloys, it is excellent in heat resistance and wear resistance. Accordingly, the present friction processing tool 20 achieves necessary hardness (for example, 400 or more in Vickers hardness at 800°C) even under high temperature caused by frictional heat at the time of processing the workpiece, and can carry out good joining or the like with respect to the workpiece made of an iron-based material such as stainless steel without any probe. In particular, it is preferable to join portions formed by causing thin plates having a thickness equal to or less than 1.5 mm, as the workpiece to butt against each other. Further, since the shoulder surface 22 of the tool 20 is formed flat without any probe, it is possible to form an outer peripheral surface shape of a grinding wheel 51 which grinds the shoulder surface 22 of the tool 20 which is worn away as a flat surface, even in a tool reconditioning mechanism 5 mentioned later, and it is possible to obtain a simple shape which can be easily produced.

### (Friction Processing Apparatus)

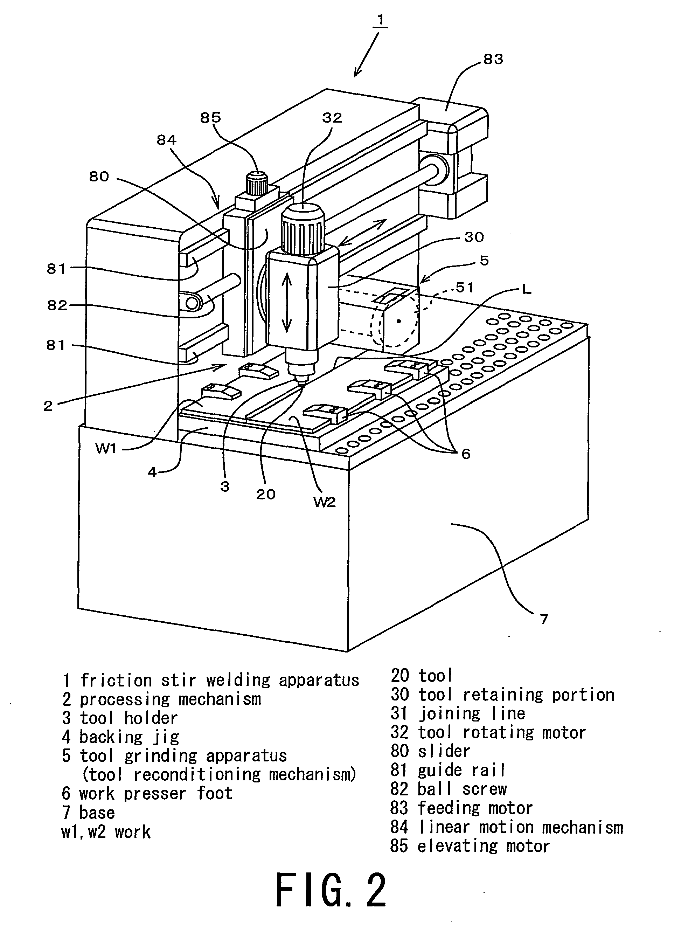

Next, a description will be given of a friction stir welding apparatus for friction joining by causing end surfaces of a plate member (a work) as the workpiece to butt against each other, as an embodiment of the friction processing apparatus. As shown in Fig. 2, the friction stir welding apparatus 1 is provided, on a base 7 for arranging works W1 and W2, with a processing mechanism 2 which carries out friction joining with respect to the works W1 and W2.

A backing jig 4 in which two tabular works W1 and W2 are arranged is provided on the base 7, and the works W1 and W2 which are arranged on the backing jig 4 are fixed by a work presser foot 6 provided in the backing jig 4 in such a manner that a joining line L formed by causing the work W1 and the work W2 to butt against each other is positioned in the center of the backing jig 4. In the backing jig 4, it is preferable that ceramics or the like such as silicon nitride is used in the case that the works W1 and W2 are made of a high melting point material such as an iron-based alloy, however, it is not limited to them. Further, the backing jig 4 may be configured by a tabular member, a rod-like member or the like which is formed by a material having small heat conductivity.

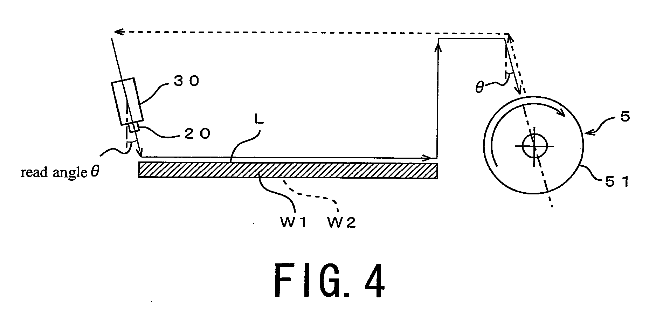

The processing mechanism 2 is provided with a tool retaining portion 30 which retains the tool 20, a rotating motor 23 which rotates the tool 20, an elevating motor 85 which moves up and down the tool retaining portion 30, and a linear motion mechanism 84 which moves the tool retaining portion 30 in a transverse direction. The tool retaining portion 30 is provided with a tool holder 3 having the tool 20 detachably attached to a lower portion. The tool holder 3 is connected to a tool rotating motor 32, and the tool 20 is rotated together with the tool holder 3 based on the driving of the tool rotating motor 32. The tool retaining portion 30 is attached so as to be movable up and down with respect to a slider 80, and is movable up and down with respect to the base 7 by the elevating motor 85 which is provided in the slider 80, whereby a tool height with respect to the works W1 and W2 can be adjusted. Further, the tool retaining portion 30 is rotatably attached to the slider 80, and is structured such that it can set the tool 20 at a predetermined lead angle θ (see Fig. 4). The slider 80 is attached to a pair of guide rails 81 and a ball screw 82 in the linear motion mechanism 84 which is provided with the pair of guide rails 81, the ball screw 82, and the feeding motor 83, and is movable in parallel to the base 7 based on the driving of the feeding motor 83.

Further, at the time of joining the works W1 and W2, the tool 20 which is rotated at high speed (for example, about 500 rpm to 2000 rpm) is pressed against one end of the joining line L of the works W1 and W2. Accordingly, the works W1 and W2 in the periphery of the joining line L are softened by the generated frictional heat. Further, if the tool 20 is moved toward the other end of the joining line L, the works W1 and W2 in the periphery of the joining line L are continuously softened by the frictional heat caused by the rotation so as to be plastically deformed or fluidized mainly in a radial direction of the shoulder surface 22, and the vicinity of the joining line L of the works W1 and W2 is friction joined.

In the present embodiment, since the friction joining is carried out only by bringing the flat shoulder surface 22 of the tool 20 which does not have any probe into pressure contact with the surface on the joining line L which is the butting portion of the plate members, it is necessary to make the frictional heat sufficiently reach aback surface of the joined plate member, and it is preferable that the plate member serving as the workpiece is a thin plate. Therefore, it is preferably used for joining the thin plates in which the plate members (the works W1 and W2) serving as the workpieces are made of an iron-based material, and a thickness is equal to or less than 1.5 mm. Note that, even if the thickness of the thin plate goes beyond 1.5 mm, it is possible to carry out good joining by setting the backing jig 4 arranged in the back surface of the thin plate to a material (for example, Si₃N₄) which is small in heat conductivity and can shield heat discharge from the back surface side of the thin plate. In the backing jig 4, as the heat conductivity is smaller, a depth at which the thin plate is softened from the shoulder surface 22 of the tool 20 which is brought into contact with the thin plate is increased. As a result, good joining can be obtained.

Further, in the tool 20 which is used in the friction stir welding apparatus 1, it is preferable that a ratio of a shoulder diameter with respect to a thickness of the thin plate serving as the workpiece is set to a size in a range between 6.5 and 15. Further, it is preferable that a friction joining condition in the friction stir welding apparatus is set in such a manner that processing is carried out under a condition that a feeding speed of the tool 20 is equal to or more than 500 mm/min and equal to or less than 900 mm/min. Further, a rotating speed of the tool 20 can be set to a rotating speed which generates heat to about 800 to about 1000°C by the frictional heat, at a time when the tool is brought into pressure contact with the workpiece. For example, it is preferable that the rotating speed of the tool 20 is set to a range between 700 rpm and 1800 rpm. Further, it is preferable that the lead angle θ (see Fig. 4) of the tool 20 is set, for example, in a range between 2 degree and 5 degree.

Based on the condition setting mentioned above, it is possible to carry out good joining with respect to the butting portion of the thin plates (W1 and W2) which are made of the iron-basedmaterial such as the stainless steel as the workpiece, by the friction working tool 20 which is not provided with any probe. Further, since it is not necessary for the tool 20 to insert the probe between the end surfaces of the butting portions of the workpieces as is different from the conventional one, it is not necessary to control a position in a depth direction of the tool 20 at high precision.

### (Tool Reconditioning Mechanism)

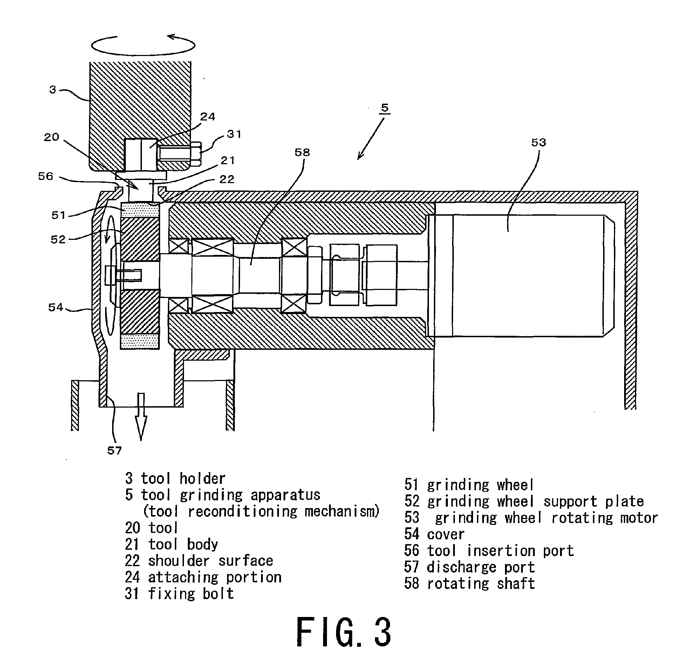

Further, the friction stir welding apparatus 1 is provided with a tool grinding apparatus 5 which serves as a tool reconditioning mechanism for reconditioning the tool 20. The tool grinding apparatus 5 is provided for grinding the shoulder surface 22 of the tool 20 which is worn away by the processing of the workpiece so as to restore and recondition into the original flat surface shape, and is arranged in one side on the base 7 in adjacent to the backing jig 4 (see Fig. 2). Further, as shown in Fig. 3, the tool grinding apparatus 5 is provided with a grinding wheel 51 which is formed in an outer periphery of a discoid grinding wheel support plate 52, and a grinding wheel rotating motor 53 which is connected to a rotating shaft 58 attached to the grinding wheel support plate 52 and rotates the grinding wheel 51. As the grinding wheel 51, it is preferable to use a diamond grinding wheel or the like in such a manner that grinding of the tool 20 can be smoothly carried out, however, it is not limited to this. For example, a cubic boron nitride (CBN) such as a Borazon may be used. Further, the grinding wheel 51 is covered by a cover 54 for preventing a ground scrap or the like which is generated from the tool 20 and the grinding wheel 51 from flying in all directions, and the cover 54 is provided in an upper surface with a tool insertion port 56 through which the tool 20 is arranged, and is provided in a lower surface with a discharge port 57 from which the ground scrap or the like is discharged.

Further, with reference to Fig. 3, at the time of reconditioning the tool 20, the tool 20 which is worn away is moved upward the tool grinding apparatus 5 while being rotated, and the shoulder surface 22 in the distal end is brought into contact with the rotating grinding wheel 51 so as to be ground. According to this, the shoulder surface 22 of the tool 20 is reconditioned into the original flat state.

Further, with reference to Fig. 4, since it is possible to grind by the grinding wheel 51 even in a state in which the lead angle θ is maintained by the tool 20, by arranging the tool grinding apparatus 5 on the base 7 in such a manner that a direction in which the joining line L of the works W1 and W2 extends coincides with a rotating direction of the grinding wheel 51, it is possible to easily carry out the reconditioning operation of the tool 20.

At the time of the reconditioning operation, a peripheral speed of the grinding wheel 51 is set to about 5 to 80 m/sec in the case of the CBN (cubic boron nitride) or the diamond grinding wheel, however, it is not limited to them. According to this, it is possible to smoothly grind without generating any fracture of the tool 20, at the time of rotating the grinding wheel 51 while rotating the tool 20 so as to grind. Further, a rotating speed of the tool 20 at the time of reconditioning is set to a rotating speed which is optimum for grinding while taking into consideration the kind of the grinding wheel 51 and the peripheral speed of the grinding wheel 51. In general, it is set to a comparatively slow rotating speed, for example, it is preferable that the rotating speed of the tool 20 is set to about 100 rpm, however, is not limited to this.

Note that, at the time of grinding the tool 20, cold air and/or mist may be supplied around the grinding wheel 51. According to this, by supplying the cold air and/or the mist at the time of grinding the tool, it is possible to make roughness of the grinding surface of the grinding wheel 51 fine, and to smoothly and efficiently grind the tool 20.

With the reconditioning operation, even if the shoulder surface 22 of the tool 20 is worn away, it is possible to restore and recondition the shoulder surface 22 to the flat surface state by the tool grinding apparatus 5. Accordingly, since it is possible to reuse the tool 20 which is worn away by the reconditioning, a service life of the tool 20 can be further improved, and a tool exchanging frequency can be reduced. Particularly, since the probe is not provided in the present friction processing tool 20, it is possible to simply form the structure of the grinding wheel 51, and it becomes easy to recondition.

Further, a torque detecting portion (not shown) for detecting rotating torque of the tool 20 is connected to the tool rotating motor 32 which rotates the tool 20, although it is not shown. The torque detecting portion is structured such as to detect the rotating torque of the tool 20 in the course of grinding the tool 20 by the grinding wheel 51. Further, the friction stir welding apparatus 1 is provided with control means (not shown) which controls so as to stop the grinding process if the rotating torque detected by the torque detecting portion reaches a predetermined set value in grinding of the tool. The set value which is the rotating torque for stopping the grinding process is set such that since the rotating torque at the time of becoming smooth by the grinding becomes smaller than the rotating torque at a time when the shoulder surface 22 of the tool 20 is worn away by the friction joining and is ground in a state in which the plane smoothness is lost, the grinding process is stopped if the rotating torque is reduced so as to maintain a fixed value for a predetermined time.

According to this, it is possible to carry out good tool reconditioning without any waste of time and without too much grinding, by detecting the rotating torque of the tool 20 by the torque detecting portion at the time of reconditioning the tool, setting the value of the rotating torque, for example, as a set value at a time when the shoulder surface 22 is made into the smooth flat surface, and stopping the reconditioning at a time when the rotating torque reaches the set value.

Note that, the present invention is not limited only to the embodiment, but can be variously modified within the scope of the present invention. For example, the torque detecting portion detects the rotating torque of the tool rotating motor 32, however, may be structured such as to detect the rotating torque of the grinding wheel rotating motor 53.

### Examples

In order to confirm that the good friction joining can be carried out even by the friction processing tool without any probe, the following examples are carried out.

### (Example 1)

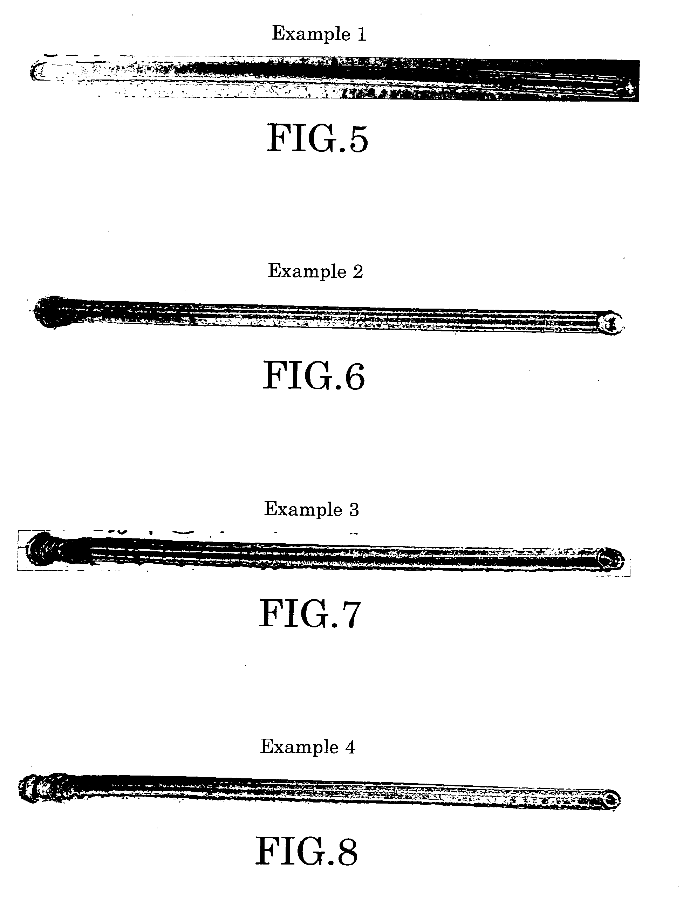

The friction processing tool employs a structure in which the shoulder diameter was 10 mm, and the shoulder surface was formed as a flat plane and had no probe as shown in Fig. 1, and friction joining was carried out by causing two thin plates (workpieces) which were made of SUS430 having a thickness of 1.0 mm, to butt against each other by the friction stir welding apparatus shown in Fig. 2.
The material of the friction processing tool was Ni-based dual multi-phase intermetallic compound alloys which included B: 50 weight ppm with respect to a total weight of a constitution of totally 100 atomic % including Ni: 75 atomic %, Al: 7 atomic %, V: 13 atomic %, Ta: 5 atomic %, and had a dual multi-phase constitution of the pro-eutectoid L1₂ phase and the (L1₂ + D0₂₂) eutectoid constitution.
The backing jig of the thin plate uses the tabular structure in the friction stir welding apparatus shown in Fig. 2, however, in Example 1, three blocks which were made of a silicon nitride (Si₃N₄), and had 30 x 30 mm square and a length of 100 mm were arranged in a joining direction so as to be used.
A friction joining condition was set such as to press the tool on the joining line of two thin plates as the workpieces while rotating at a lead angle of 3 degree and at a tool rotating speed of 1500 rpm, and move linearly for 250 mm at a tool feeding speed of 900 mm/min after the tool emits orange light by the frictional heat, and the joining line formed by causing two thin plates to butt against each other is friction joined. Note that, a load applied to the tool at the time of processing was set to about 0.7 ton.
Further, an execution state in the joined portion of the thin plates after being joined is shown in a photograph in Fig. 5.

### (Tensile Test)

Next, in order to measure strength of the joined portion of the butt joining of the thin plates, a test piece was prepared by cutting the joined portion in a direction which is orthogonal to the joining direction, and a tensile test was carried out according to JISZ 2241 "metal material tensile test method".
The test piece was based on a shape of a test piece of JISZ 2201 5, and was set to a width 25 mm and a length of parallel portion 50 mm. Further, a cross head speed at the time of measuring was set to 20 mm/min.

### (Example 2)

In Example 2, the friction joining was carried out in the same manner as Example 1 except a matter that the friction processing tool employed a structure in which the shoulder diameter was set to 12 mm, and the test piece was prepared to carry out the tensile test.
Further, with regard to Example 2, an execution state in the joined portion of the thin plates after being joined is shown in a photograph in Fig. 6.

### (Example 3)

In Example 3, the friction joining was carried out in the same manner as Example 1 except a matter that the friction processing tool employed a structure in which the shoulder diameter was set to 14 mm, and the tool feeding speed was set to 700 mm/min in the friction joining condition, and the test piece was prepared to carry out the tensile test.
Further, with regard to Example 3, an execution state in the joined portion of the thin plates after being joined is shown in a photograph in Fig. 7.

### (Example 4)

In Example 4, the friction joining was carried out in the same manner as Example 1 except a matter that the friction processing tool employed a structure in which the shoulder diameter was set to 12 mm, the thin plate serving as the workpiece was set to a thickness of 0.8 mm, and the tool feeding speed was set to 550 mm/min in the friction joining condition, and the test piece was prepared to carry out the tensile test.
Further, with regard to Example 4, an execution state in the joined portion of the thin plates after being joined is shown in a photograph in Fig. 8.

### (Example 5)

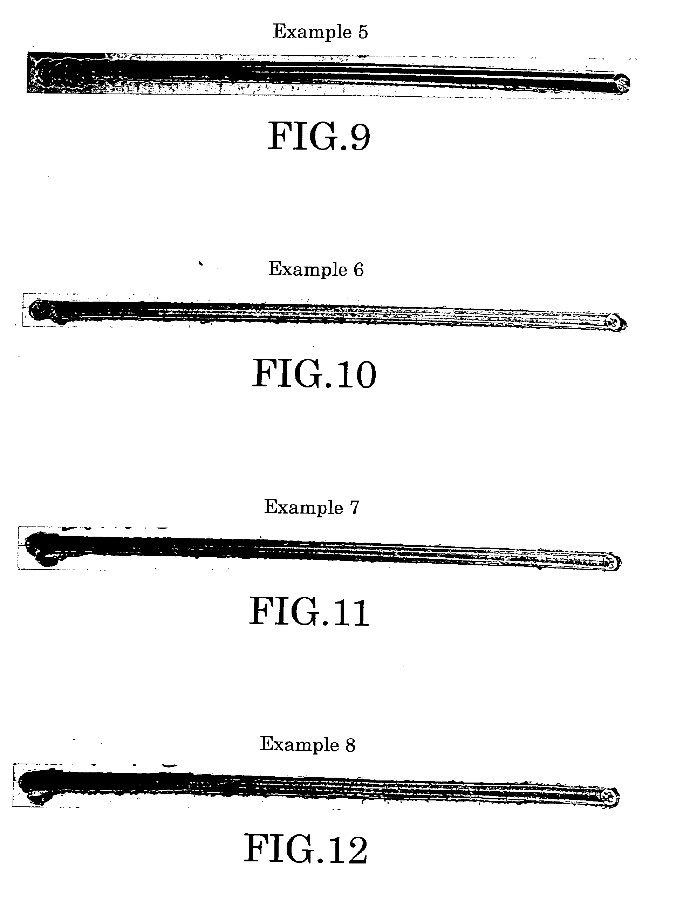

In Example 5, the friction joining was carried out in the same manner as Example 4 except a matter that the tool feeding speed was set to 650 mm/min in the friction joining condition, and the test piece was prepared to carry out the tensile test.
Further, with regard to Example 5, an execution state in the joined portion of the thin plates after being joined is shown in a photograph in Fig. 9.

### (Example 6)

In Example 6, the friction joining was carried out in the same manner as Example 1 except a matter that the friction processing tool employed a structure in which the shoulder diameter was set to 8 mm, and the test piece was prepared to carry out the tensile test.
Further, with regard to Example 6, an execution state in the joined portion of the thin plates after being joined is shown in a photograph in Fig. 10.

### (Example 7)

In Example 7, the friction joining was carried out in the same manner as Example 6 except a matter that the tool feeding speed was set to 700 mm/min in the friction joining condition, and the test piece was prepared to carry out the tensile test.
Further, with regard to Example 7, an execution state in the joined portion of the thin plates after being joined is shown in a photograph in Fig. 11.

### (Example 8)

In Example 8, the friction joining was carried out in the same manner as Example 6 except a matter that the tool feeding speed was set to 500 mm/min in the friction joining condition, and the test piece was prepared to carry out the tensile test.
Further, with regard to Example 8, an execution state in the joined portion of the thin plates after being joined is shown in a photograph in Fig. 12.

### (Example 9)

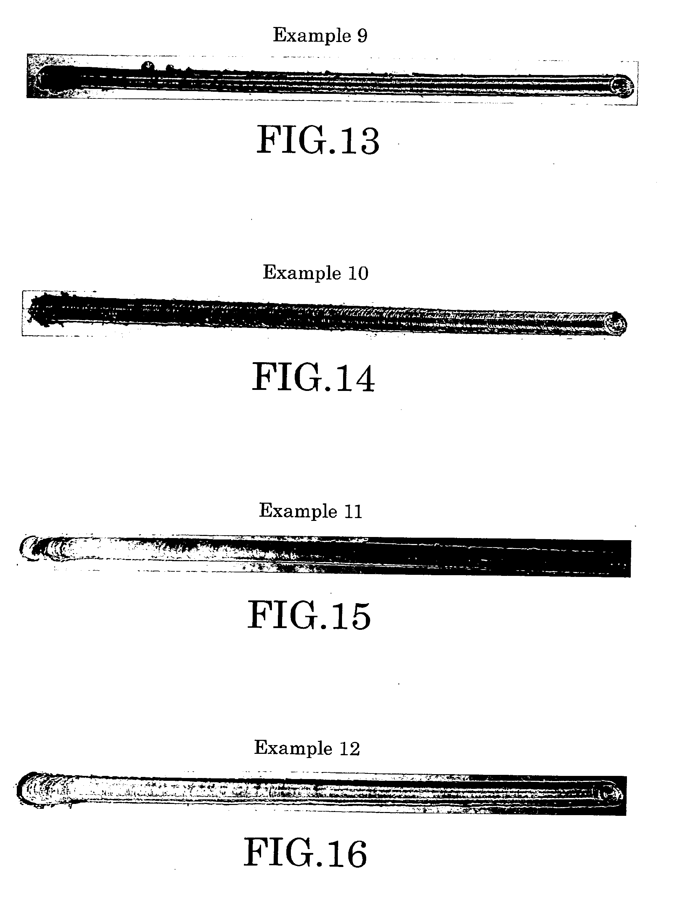

In Example 9, the friction joining was carried out in the same manner as Example 1 except a matter that the thickness of the thin plate serving as the workpiece was set to 1.5 mm, and the tool feeding speed was set to 700 mm/min in the friction joining condition, and the test piece was prepared to carry out the tensile test.
Further, with regard to Example 9, an execution state in the joined portion of the thin plates after being joined is shown in a photograph in Fig. 13.

### (Example 10)

In Example 10, the friction joining was carried out in the same manner as Example 9 except a matter that the tool feeding speed was set to 500 mm/min in the friction joining condition, and the test piece was prepared to carry out the tensile test.
Further, with regard to Example 10, an execution state in the joined portion of the thin plates after being joined is shown in a photograph in Fig. 14.

### (Example 11)

In Example 11, the friction joining was carried out in the same manner as Example 1 except a matter that the thickness of the thin plate serving as the workpiece was set to 0.8 mm, the tool rotating speed was set to 1000 rpm and the tool feeding speed was set to 500 mm/min in the friction joining condition, and the test piece was prepared to carry out the tensile test.
Further, with regard to Example 11, an execution state in the joined portion of the thin plates after being joined is shown in a photograph in Fig. 15.

### (Example 12)

In Example 12, the friction joining was carried out in the same manner as Example 1 except a matter that the friction processing tool employed a structure in which the shoulder diameter was set to 14 mm, the thickness of the thin plate serving as the workpiece was set to 1.5 mm, the tool rotating speed was set to 900 rpm and the tool feeding speed was set to 500 mm/min in the friction joining condition, and the test piece was prepared to carry out the tensile test.
Further, with regard to Example 12, an execution state in the joined portion of the thin plates after being joined is shown in a photograph in Fig. 16.

### (Example 13)

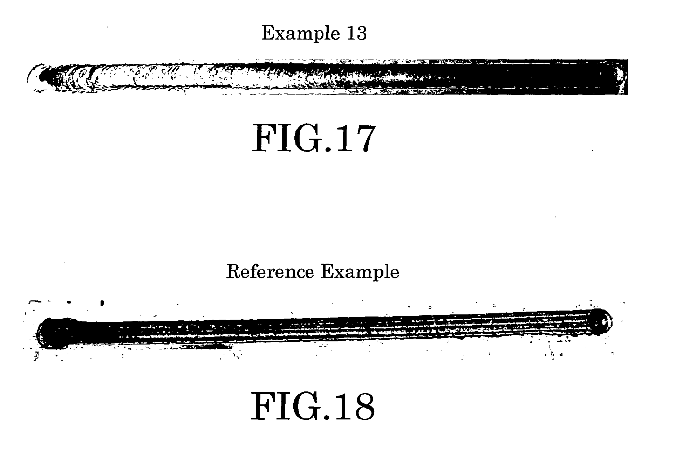

In Example 13, the friction joining was carried out in the same manner as Example 1 except a matter that the friction processing tool employed a structure in which the shoulder diameter was set to 12 mm, the tool rotating speed was set to 800 rpm and the tool feeding speed was set to 500 mm/min in the friction joining condition, and the test piece was prepared to carry out the tensile test.
Further, with regard to Example 13, an execution state in the joined portion of the thin plates after being joined is shown in a photograph in Fig. 17.

### (Reference Example)

In a reference example, the friction stir welding was carried out in the same manner as Example 1 except a matter that the friction processing tool employed a structure in which the shoulder diameter was set to 12 mm, and the center of the shoulder surface was provided with a probe which protrudes like a spherical surface having a radius of 2 mm and a height of 0.73 mm, and the tool rotating speed was set to 1400 rpm in the friction stir welding condition, and the test piece was prepared to carry out the tensile test.
Further, with regard to the reference example, an execution state in the joined portion of the thin plates after being joined is shown in a photograph in Fig. 18.

The conditions and results of each of the examples and the reference example mentioned above will be shown in Table 1.

| | TOOL | | WORKPICE | | FSW CODITION | | TENSILE TSET | |
|---|---|---|---|---|---|---|---|---|
| | alloy class | shoulder diameter | material | thickness | feeding speed | rotating speed | tensile strength | break position |
| | | mm | | mm | mm/min | rpm | N/mm2 | |
| Example 1 | Ni-Al-V | 10 | SUS430 | 1.0 | 900 | 1500 | 535 | base material |
| Example 2 | Ni-Al-V | 12 | SUS430 | 1.0 | 900 | 1500 | 532 | base material |
| Example 3 | Ni-Al-V | 14 | SUS430 | 1.0 | 700 | 1500 | 565 | joined portion |
| Example 4 | Ni-Al-V | 12 | SUS430 | 0.8 | 550 | 1500 | 546 | joined portion |
| Example 5 | Ni-Al-V | 12 | SUS430 | 0.8 | 650 | 1500 | 492 | joined portion |
| Example 6 | Ni-Al-V | 8 | SUS430 | 1.0 | 900 | 1500 | 565 | base material |
| Example 7 | Ni-Al-V | 8 | SUS430 | 1.0 | 700 | 1500 | 566 | base material |
| Example 8 | Ni-Al-V | 8 | SUS430 | 1.0 | 500 | 1500 | 566 | base material |
| Example 9 | Ni-Al-V | 10 | SUS430 | 1.5 | 700 | 1500 | 501 | joined portion |
| Example 10 | Ni-Al-V | 10 | SUS430 | 1.5 | 500 | 1500 | 536 | base material |
| Example 11 | Ni-Al-V | 10 | SUS430 | 0.8 | 500 | 1000 | 549 | base material |
| Example 12 | Ni-Al-V | 14 | SUS430 | 1.5 | 500 | 900 | 505 | joined portion |
| Example 13 | Ni-Al-V | 12 | SUS430 | 1.0 | 500 | 800 | 553 | base material |
| Reference Example | Ni-Al-V | 12 | SUS430 | 1.0 | 900 | 1400 | 535 | base material |

As shown in Table 1, in each of the examples, the execution state of the joined portion which is friction joined in the thin plates of SUS430 (thickness between 0.8 and 1.5 mm) is good in an outer appearance. According to this, even in each of the examples in which the tool which is made of Ni-based dual multi-phase intermetallic compound alloys and has no probe is used, the joined portion of the thin plates can obtain a good finished state in the same manner as the reference example in which the tool which is made of the Ni-based dual multi-phase intermetallic compound alloys and has the probe is used.

Further, with regard to the tensile strength, in each of the examples, a good joining force which is in a range between 492 and 566 N/mm², and does not pale in comparison with 535 N/mm² of the reference example can be obtained. Note that, tensile strength of the SUS 430 base material which is measured under the same condition as the tensile test shown in the example is 519 N/mm² in an average of n = 3. Accordingly, it is known that in the tensile strength of each of the examples, sufficient strength which does not pale in comparison with the SUS 430 base material is obtained.

As mentioned above, even by using the tool which is made of the Ni-based dual multi-phase intermetallic compound alloys and has no probe, it is possible to carry out the friction joining of the thin plates of SUS 430 with a quality which is hardly different from the case of using the conventional tool having the probe.

### Description of Reference Numerals

1: friction stir welding apparatus (friction processing apparatus)
2: processing mechanism
5: tool reconditioning mechanism (tool grinding apparatus)
20: friction processing tool
21: tool body
22: shoulder surface
51: grinding wheel
L: joining line
W1, W2: work (workpiece)
θ: lead angle

## Claims

1. A friction processing tool for softening and processing workpieces by frictional heat generated by being pressed against the workpieces of a metal material while being rotated,
wherein the tool is provided with a cylindrical tool body, and a distal end surface of the tool body brought into contact with the workpiece is formed only by a flat shoulder surface.

2. The friction processing tool according to claim 1, wherein the friction processing tool is made of Ni-based dual multi-phase intermetallic compound alloys.

3. A friction processing apparatus comprising a processing mechanism which presses a friction processing tool against workpieces of a metal material while rotating and relatively moves in a processing direction,
wherein the friction processing tool is the friction processing tool according to claim 1 or 2, and is structured such that a ratio of a shoulder diameter with respect to a thickness of a thin plate serving as the workpiece is between 6.5 and 15, and
wherein the processing mechanism is structured such that a tool feeding speed is set between 500 and 900 mm/min.

4. The friction processing apparatus according to claim 3, wherein a condition of the friction processing tool and the processing mechanism is set with respect to a thin plate made of an iron-based material having a thickness equal to or less than 1.5 mm, as the workpiece.

5. The friction processing apparatus according to claim 3 or 4, further comprising:
a tool reconditioning mechanism which grinds a distal end surface formed only by the shoulder surface in the friction processing tool which is worn away by the friction processing by a grinding wheel,
wherein the tool reconditioning mechanism is provided with control means which controls so as to rotate the grinding wheel while rotating the friction processing tool and grind a distal end surface of the tool body, and controls so as to stop the reconditioning if an output value of torque detecting means detecting a rotating torque of the friction processing tool or a rotating torque of the grinding wheel reaches a predetermined set value.

6. A friction processing method of softening and processing workpieces of a metal material by frictional heat, by pressing a friction processing tool against the workpieces while rotating and relatively moving in a processing direction,
wherein the friction processing tool is the friction processing tool according to claim 1 or 2, and the workpieces is processed by using the tool in which a ratio of a shoulder diameter with respect to a thickness of a thin plate made of an iron-based material having a thickness equal to or less than 1.5 mm is between 6.5 and 15, as the workpiece.

## Amended claims

Statement under Art. 19.1 PCT
The invention of the friction processing tool in claim 1 incorporates the claim 2 before being amended, and clarifies that it is used in the workpieces of the iron-based material.

Claim2 is substituted with the new contents as the friction processing tool which depends on claim 1, based on the description "the friction processing tool is structured such that a ratio of a shoulder diameter with respect to a thickness of a thin plate serving as the workpiece is between 6.5 and 15" described in the claim 3 before being amended.

Claim 3 is deleted in the claim 3 before being amended, and is substituted with the new contents as the friction processing tool which depends on claim 1 or claim 2 based on the description in paragraph [0019] of the specification.

Claim 4 rewrites the invention of the friction processing apparatus into the independent claim, clarifies that it uses the friction processing tool according to any one of the amended claims 1 to 3, and incorporates the contents "the processing mechanism is structured such that a tool feeding speed is set between 500 and 900 mm/min" in the claim 3 before being amended.

Claim 5 rewrites the invention of the friction processing apparatus into the independent claim, and clarifies that it uses the friction processing tool according to any one of the amended claims 1 to 3.

Claim 6 clarifies that it uses the friction processing tool according to any one of the amended claims 1 to 3.
